# EUROPÄISCHE PATENTSCHRIFT

(11) **EP 1 003 600 B1**
(45) Veröffentlichungstag und Bekanntmachung des Hinweises auf die Patenterteilung: **02.07.2003**
(21) Anmeldenummer: 98939641.1
(22) Anmeldetag: 25.07.1998
(51) Int. Cl.: B01D 29/01, B01D 63/08, B29C 65/02

(54) **FILTRATIONSEINHEIT AUS KUNSTSTOFF UND VERFAHREN ZU IHRER HERSTELLUNG**
PLASTIC FILTRATION UNIT AND METHOD FOR PRODUCING THE SAME
UNITE DE FILTRATION EN PLASTIQUE ET PROCEDE DE PRODUCTION CORRESPONDANT

(30) Priorität: 31.07.1997 DE 19733021
(43) Veröffentlichungstag der Anmeldung: 31.05.2000
(73) Patentinhaber: SARTORIUS AG, 37075 Göttingen (DE)
(72) Erfinder: GRAUS, Andreas, D-37176 Nörten-Hardenberg (DE); SCHÄFER, Christian, D-37170 Uslar (DE); SCHÜTZLER, Michael, D-37124 Rosdorf (DE)
(86) Internationale Anmeldenummer: EP9804685
(87) Internationale Veröffentlichungsnummer: WO99006135

(56) Entgegenhaltungen:
- DE-A- 4 219 966
- US-A- 4 229 306
- US-A- 4 414 172
- US-A- 4 675 065

## Beschreibung

Die Erfindung betrifft eine Filtrationseinheit aus Kunststoff zur Filtration von Fluiden mit einem Filterelement, welches in einem Gehäuse aus zwei miteinander verbundenen Teilen angeordnet ist und das Gehäuse in ein- und auslaßseitige über Fluidanschlüsse verfügende Gehäuseräume dadurch trennt, daß die erste Seite des Filterelements dem einlaßseitigen Gehäuseraum und die zweite Seite des Filterelements dem auslaßseitigen Gehäuseraum zugewandt ist, sowie ein Verfahren zur Herstellung der Filtrationseinheit. Derartige Filtrationseinheiten werden vorwiegend in Labors und in der Medizintechnik als Dead-End- oder als Crossflow-Filtrationseinheiten zur Filtration von Flüssigkeiten und Gasen, einschließlich der Sterilfiltration eingesetzt. In der Regel werden sie als relativ kleine Disposables betrieben, beispielsweise als Spritzenvorsätze oder als Aufkonzentratoren in bio- und gentechnischen Labors. Mit Membranadsorbern ausgerüstet dienen sie zur Entfernung von Schadstoffen oder zur Gewinnung von Wertstoffen, die nur in geringen Konzentrationen in den Fluiden vorkommen.
Filtrationseinheiten der eingangs genannten Art sind bekannt. So beschreibt die US-A-3,782,083 einen rotationssymmetrischen Disposable-Gasfilter, der aus einem zweiteiligen Gehäuse zusammengesetzt ist, wobei die beiden Gehäuseteile mit einem Ein- und Auslaß für Fluide ein Flachfilterelement fluiddicht unter Ausbildung eines ein- und auslaßseitigen Gehäuseraumes einschließen. Die Gehäuseteile sind im peripheren Randbereich so ausgebildet, daß sie beim Zusammendrücken ineinander schnappen. Das Filterelement wird dabei gegen ein konzentrisches, überstehendes Montageglied des einen Gehäuseteils gedrückt und durch Schmelzen des Montagegliedes mit diesem fluiddicht verbunden, wobei die Schmelze die Poren des Filterelements durchdringt. Nachteilig ist, daß beim Durchdringen der Schmelze durch die Poren des Filterelements im Falle der Verwendung von Membranfilterelementen häufig eine Schädigung der Membranen und eine Beeinträchtigung ihrer Filtrationseigenschaften eintritt. Die Membranen werden im Randbereich der sie durchdringenden Schmelze brüchig oder im Falle hydrophiler Membranen tritt eine sogenannte Randhydrophobie auf. Ein weiterer Nachteil besteht darin, daß derartige Disposables Druckdifferenzen von mehr als drei bar bei der Filtration nicht standhalten. Die zusätzliche Anbringung einer umlaufenden druckbeständigen Einfassung der Außenränder der Gehäuseteile in Form eines umspritzten Rings gemäß EP 0 325 712 A1 ist mit einem zusätzlichen Material- und Arbeitsaufwand verbunden.
Aus der EP 0 118 601 B1 ist bekannt, daß der Effekt der Randhydrophobie bei fasrigen hydrophilen Membranen nicht auftritt, wenn lediglich die Oberflächen der hydrophilen Filtermembran mittels einer Kunststoff-Schweißverbindung mit den Gehäuseteilen derart verbunden werden, daß der schmelzflüssige Kunststoff das poröse Filtermaterial nicht durchdringt. Nachteilig ist, daß bei Druckdifferenzen von mehr als drei bar, das Gehäuse derart gedehnt wird, daß die Oberflächenverbindung undicht wird und die Filtrationseinheit verworfen werden muß.

Der Erfindung liegt deshalb die Aufgabe zugrunde, eine Filtrationseinheit aus einem zweiteiligen Kunststoffgehäuse zu schaffen, die zur Filtration von Fluiden mit Druckdifferenzen bis zu 10 bar geeignet ist und bei der das Filterelement so mit dem Gehäuse verbunden ist, daß keiner der vorstehend genannten Schäden auftritt. Eine weitere Aufgabe besteht in der Schaffung eines einfachen Verfahrens zur Herstellung der Filtrationseinheit, damit sie aus betriebswirtschaftlichen Gründen als Disposable eingesetzt werden kann.

Die Aufgabe wird gelöst durch eine Filtrationseinheit aus Kunststoff zur Filtration von Fluiden mit einem Filterelement, welches in einem Gehäuse aus zwei ineinander fassenden und miteinander verbundenen Teilen angeordnet ist und das Gehäuse in ein- und auslaßseitige über Fluidanschlüsse verfügende Gehäuseräume dadurch trennt, daß die erste Seite des Filterelements dem einlaßseitigen Gehäuseraum und die zweite Seite des Filterelements dem auslaßseitigen Gehäuseraum zugewandt ist und wobei fluiddichte Verbindungen zwischen dem Gehäuseteil und dem Filterelement sowie dem Gehäuseteil bestehen und wobei die Oberfläche der ersten Seite des Filterelementrandes mit dem einen Gehäuseteil fluiddicht verbunden ist und die Oberfläche der zweiten Seite des Filterelementrandes gegen einen geschlossen umlaufenden Auflagenbereich für das Filterelement des zweiten Gehäuseteils gepreßt ist, wobei
die Verbindungen nur aus jeweils einem Schenkel einer einzigen erstarrten L-förmigen Kunststoffschmelze zwischen den Gehäuseteilen und zwischen dem einen Gehäuseteil und der Oberfläche der ersten Seite des Filterelementrandes bestehen, wobei die Kunststoffschmelze durch Aufschmelzen eines Teils des Kunststoffs mindestens des einen Gehäuseteils entstanden ist und ein Schenkel der erstarrten L-förmigen Kunststoffschmelze beide Gehäusehälften druckfest verbindet. Überraschenderweise wurde gefunden, daß die Filtrationseinheit über eine hervorragende Festigkeit verfügt und die Filtration von Fluiden mit Druckdifferenzen von bis zu 10 bar zuläßt, wenn alle Verbindungen aus einer einzigen erstarrten L-förmigen Kunststoffschmelze bestehen, die durch Aufschmelzen eines Teils des Kunststoffs mindestens des einen Gehäuseteils entstanden ist. Das bedeutet, daß der eine Schenkel der errstarrten L-förmigen Kunststoffschmelze beide Gehäusehälften druckfest verbindet und der andere Schenkel der erstarrten L-förmigen Kunststoffschmelze die Oberfläche der ersten Seite des Filterelementrandes mit dem einen Gehäuseteil fluiddicht verbindet.

Die erstarrte L-förmige Kunststoffschmelzverbindung wird dadurch erzeugt, daß ein Teil des Kunststoffs im Innenumfangsbereich der Gehäusewand des zweiten Gehäuseteils, deren innere Weite geringer ist als die äußere Weite der Gehäusewand des ersten Gehäuseteils, geschmolzen wird und beide Gehäuseteile ineinander geschoben werden,
wobei ein Teil der Schmelze von der Gehäusewand des zweiten Gehäuseteils durch Abschälen und Abrollen zwischen die Basis der Gehäusewand des ersten Gehäuseteils und die Oberfläche der ersten Seite des Filterelementrandes gebracht wird. Die Schmelze wird in üblicher Weise erzeugt, beispielsweise durch Wärmestrahlung, Reibschweißen, Ultraschall- oder Laserstrahleinwirkung.
Die Schenkel der erstarrten L-förmigen Kunststoffschmelze sollen in einem Winkel von 90° bis kleiner 180° zueinander stehen, vorzugsweise sollen sie ungefähr rechtwinklig bis zu einem Winkel von 135° zueinander stehen. Der gewünschte und von 90° abweichende Winkel wird dadurch erzeugt, daß die Gehäusewände der Gehäuseteile einander entsprechend einseitig konisch ausgebildet sind.
Das Filterelement besteht aus mindestens einer Lage einer porösen Filtermembran. Im Falle der Verwendung von Membranadsorbern werden zweckmäßigerweise zur Erhöhung der Adsorptionskapazität mehrere Lagen in Form eines Membranstapels verwendet. Dabei ist die Oberfläche des Filterelementrandes der ersten Lage mit dem einen Schenkel der L-förmigen erstamten Kunststoffschmelze verbunden, während die übrigen Lagen in ihrem peripheren Randbereich von erstarrter Kunststoffschmelze eingebettet sind, wodurch eine ausreichende Abdichtung gewährleistet ist. Die poröse Filtermembran kann auch verstärkt sein, zum Beispiel eine integral oder laminiert textilverstärkte Membran, oder sie kann lediglich auf einer textilen Verstärkung, beispielsweise auf einem Faservlies aufliegen. Das Filterelement kann auch nur aus mindestens einer Lage eines Faservlieses bestehen. Als poröse Filtermembranen kommen Ultrafiltrations- und Mikrofiltrationsmembranen in Frage.

In einer vorteilhaften Ausgestaltung der Erfindung ist das Filterelement abgestützt. Als Filterabstützung können alle bekannten Abstützungen verwendet werden. Die Filterelemente können einseitig oder zweiseitig abgestützt sein. Sie können so ausgebildet sein, daß sie eine bestimmte Strömungsführung für die Fluide erzwingen. Für erfindungsgemäße Filtrationseinheiten, die nach dem Crossflow-Prinzip betrieben werden kommen auf der Anströmseite zur Strömungsführung des Retentats Filterabstützungen mit Strömungsführungseinrichtungen zum Einsatz, die vorzugsweise eine parallele, wellenfärmige, spriralförmige und mäanderförmige Überströmung erzwingen.
Bei Dead-End-Filtrationseinheiten ist die Filterabstützung so gewählt, daß ein optimaler Zu- und Abfluß der Fluide zur Oberfläche des Filterelements hin und von der Oberfläche des Filterelements weg bei optimaler mechanischer Abstütz- und Schutzfunktion gewährleistet ist. Zweckmäßigerweise wird die Filterabstützung in einer Vertiefung der Basis der Gehäuseteile eingebracht, wobei die Vertiefung etwa der Dicke der Filterabstützung entspricht.
Die Filtrationseinheiten sind in beliebiger Form herstellbar, wobei rotationssymmetrische bevorzugt sind. Im Falle von Crossflow-Filtrationseinheiten sind rechteckige Formen bevorzugt.

Bei der Herstellung der Filtrationseinheiten wird in einem ersten Verfahrensschritt das Filterelement in das zweite Gehäuseteil eingebracht und am geschlossen umlaufenden Auflagenbereich für das Filterelement fixiert. Das Fixieren kann besipielsweise durch Anlegen eines Vakuums unterhalb des eingebrachten Filterelements oder durch Beaufschlagen des Filterelements mit einem Gasdruck oberhalb des eingebrachten Filterelements erfolgen. Wenn das Fixieren des Filterelements unterbleibt, besteht die Gefahr, daß die abgeschälte und abrollende Schmelze das Filterelement zumindest teilweise aus seiner zentrierten Position wegdrückt und es zu Leckstellen oder zumindest zu einer unzureichender Bedeckung einzelner Stellen der einen Oberfläche des Filterelementrandes mit der Schmelze kommt.

Die Erfindung wird nun anhand der Figuren 1 bis 3 näher erläutert.
Dabei zeigt
- Fig. 1: schematisch einen Schnitt durch eine erfindungsgemäße Dead-End-Filtrationseinheit,
- Fig. 2: schematisch einen Schnitt durch einen Teil der zweiten Gehäusehälfte einer bevorzugten Ausführungsform und
- Fig. 3: schematisch einen Schnitt durch eine erfindungsgemäße Crossflow-Filtrationseinheit während des Zusammenfügens.

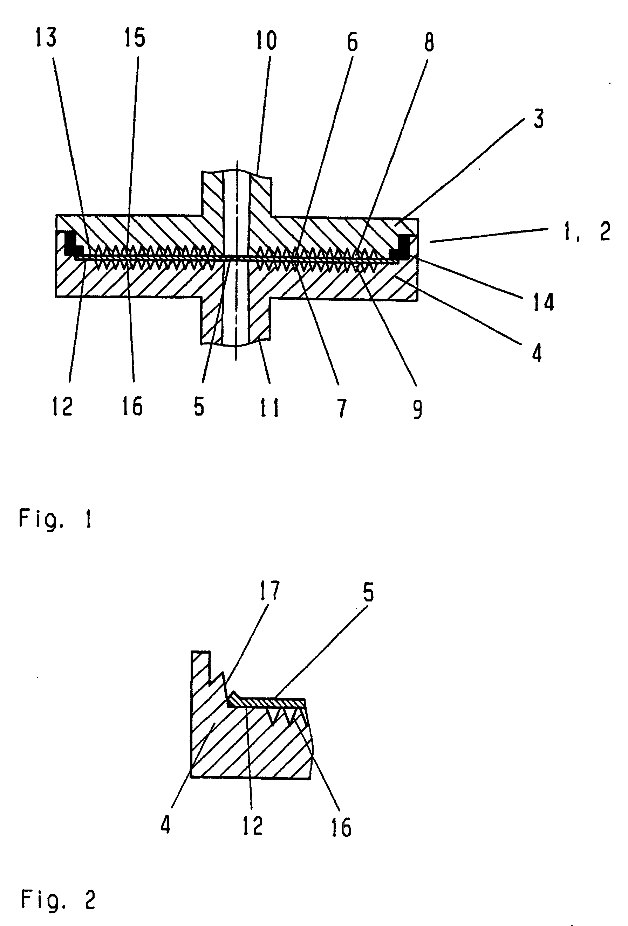

Wie aus der Figur 1 hervorgeht, besteht die Filtrationseinheit **1** aus einem Gehäuse **2** aus einem ersten **3** und einem zweiten **4** Teil, die mit den umlaufenden Gehäusewänden ineinander fassen und miteinander verbunden sind. Die Gehäuseteile umschließen ein Filterelement **5** mit einer ersten und zweiten Seite **6, 7** in seinem peripheren Randbereich, so daß das Gehäuse in ein- und auslaßseitige Gehäuseräume **8, 9** mit Fluidanschlüssen für den Einlaß **10** für zu filtrierendes Fluid und für den Auslaß **11** für Filtrat trennt. Das zweite Gehäuseteil **4** ist mit einem geschlossen umlaufenden Auflagenbereich **12** für das Filterelement **5** ausgestattet, gegen welches die Oberfläche der zweiten Seite **7** des Filterelementrandes gepreßt ist. Die Oberfläche der ersten Seite **6** des Filterelementrandes ist über einen geschlossen umlaufenden Bereich **13** der Basis mit dem ersten Gehäuseteil **3** fluiddicht verbunden. Die Verbindungen zwischen den ineinander fassenden Seitenwänden der Gehäusehälften **3, 4** und zwischen dem geschlossen umlaufenden Bereich **13** der Basis der ersten Gehäusehälfte **3** und der Oberfläche der ersten Seite **6** des Filterelementrandes bestehen aus einer einzigen erstarrten L-förmigen Kunststoffschmelze **14.** Das Filterelement **5** ist beidseitig durch Filterabstützungen **15, 16** abgestützt.
Die Figur 2 zeigt schematisch einen Schnitt durch einen Teil der zweiten Gehäusehälfte **4** einer bevorzugten Ausführungsform der Erfindung, bei der zur Erzeugung eines Winkels von größer 90° und kleiner 180° der L-förmigen erstarrten Kunststoffschmelzverbindung die umlaufende Seitenwand konisch **17** ausgebildet ist.

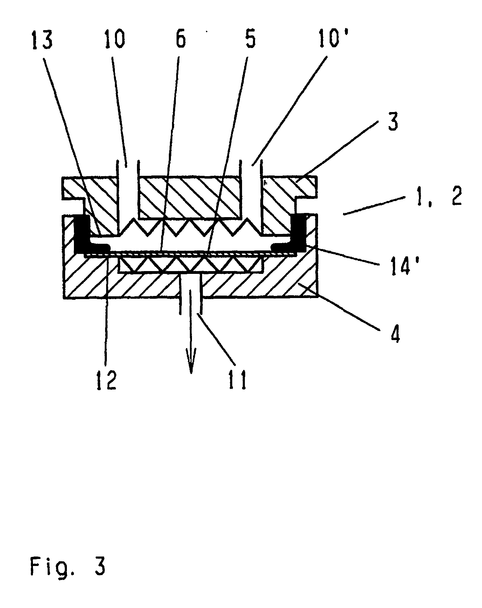

Die Figur 3 zeigt schematisch einen Schnitt durch eine erfindungsgemäße Crossflow-Filtrationseinheit während des Zusammenfügens. Im Unterschied zur Dead-End-Filtrationseinheit gemäß Figur 1 ist in der ersten Gehäusehälfte **3** zusätzlich ein Fluidanschluß **10'** fiir die Abfuhr von Retentat angebracht.
Die erfindungsgemäße Filtrationseinheit **1** aus Kunststoff wird hergestellt, indem folgende Verfahrensschritte durchgeführt werden:
Einbringen des Filterelements **5** in das zweite Gehäuseteil **4** und Fixieren des Filterelements am geschlossen umlaufenden Auflagenbereich für das Filterelement **12** (Gemäß Figur 3 soll die Fixierung durch Anlegen eines Unterdrucks am Anschluß für Filtratausgang **11** erfolgen, was durch den Pfeil symbolisiert ist.), Schmelzen eines Teils des Kunststoffs **14'** im Innenumfangsbereich der Gehäusewand des zweiten Gehäuseteils **4**, deren innere Weite etwas geringer ist als die äußere Weite der Gehäusewand des ersten Gehäuseteils **3**, Ineinanderschieben beider Gehäuseteile **3, 4,** wobei ein Teil der Schmelze **14'** von der Gehäusewand des zweiten Gehäuseteils **4** durch Abschälen und Abrollen zwischen die Basis der Gehäusewand des ersten Gehäuseteils **3** und die Oberfläche der ersten Seite **6** des Filterelementrandes gebracht wird, Aneinanderpressen beider Gehäuseteile **3, 4** und Erkaltenlassen der Schmelze, wodurch eine einzige erstarrte L-förmige Kunststoffschmelzverbindung zwischen den Gehäuseteilen und zwischen dem einen Gehäuseteil und der Oberfläche der ersten Seite des Filterelementrandes erzeugt wird.

## Patentansprüche

1. Filtrationseinheit (1) aus Kunststoff zur Filtration von Fluiden mit einem Filterelement (5), welches in einem Gehäuse (2) aus zwei ineinander fassenden und miteinander verbundenen Teilen (3,4) angeordnet ist und das Gehäuse in ein- und auslaßseitige über Fluidanschlüsse (10,11) verfügende Gehäuseräume (8,9) dadurch trennt, daß die erste Seite des Filterelements (6) dem einlaßseitigen Gehäuseraum (8) und die zweite Seite des Filterelements (7) dem auslaßseitigen Gehäuseraum (9) zugewandt ist und wobei fluiddichte Verbindungen zwischen dem Gehäuseteil (3) und dem Filterelement (5) sowie dem Gehäuseteil (4) bestehen und wobei die Oberfläche der ersten Seite (6) des Filterelementrandes mit dem einen Gehäuseteil (3) fluiddicht verbunden ist und die Oberfläche der zweiten Seite (7) des Filterelementrandes gegen einen geschlossen umlaufenden Auflagenbereich (12) für das Filterelement des zweiten Gehäuseteils gepreßt ist
**dadurch gekennzeichnet, daß**
die Verbindungen nur aus jeweils einem Schenkel einer einzigen erstarrten L-förmigen Kunststoffschmelze (14) zwischen den Gehäuseteilen (3,4) und zwischen dem einen Gehäuseteil (3) und der Oberfläche der ersten Seite (6) des Filterelementrandes bestehen, wobei die Kunststoffschmelze (14) durch Aufschmelzen eines Teils des Kunststoffs mindestens des einen Gehäuseteils (4) entstanden ist und ein Schenkel der erstarrten L-förmigen Kunststoffschmelze (14) beide Gehäusehälften (3, 4) druckfest verbindet.

2. Filtrationseinheit nach Anspruch 1,
**dadurch gekennzeichnet, daß**
die Schenkel der erstarrten L-förmigen Kunststoffschmelze (14) ungefähr rechtwinklig zueinander stehen.

3. Filtrationseinheit nach Anspruch 1,
**dadurch gekennzeichnet, daß**
die Schenkel der erstarrten L-förmigen Kunststoffschmelze (14) in einem Winkel größer 90° und kleiner 180°, vorzugsweise kleiner 135°, zueinander stehen.

4. Filtrationseinheit nach den Ansprüchen 1 bis 3,
**dadurch gekennzeichnet, daß**
das Filterelement (5) aus mindestens einer Lage einer porösen Filtermembran besteht.

5. Filtrationseinheit nach Anspruch 4,
**dadurch gekennzeichnet, daß** die porösen Filtermembranen des Filterelements (5) verstärkt sind.

6. Filtrationseinheit nach den Ansprüchen 1 bis 3,
**dadurch gekennzeichnet, daß**
das Filterelement (5) aus mindestens einer Lage eines Faservlieses besteht.

7. Filterelement nach den vorstehenden Ansprüchen,
**dadurch gekennzeichnet, daß**
das Filterelement (5) durch wenigstens eine Filterabstützung (15,16) abgestützt ist.

8. Verfahren zur Herstellung einer Filtrationseinheit (1) aus Kunststoff mit einem Filterelement (5), welches in einem Gehäuse (2) aus zwei ineinander fassenden und miteinander verbundenen Teilen (3,4) angeordnet wird, um das Gehäuse (2) in ein- und auslaßseitige über Fluidanschlüsse (10,10',11) verfügende Gehäuseräume (8,9) dadurch zu trennen, daß die erste Seite (6) des Filterelements (5) dem einlaßseitigen Gehäuseraum (8) und die zweite Seite (7) des Filterelements (5) dem auslaßseitigen Gehäuseraum (9) zugewandt wird und wobei die Oberfläche der ersten Seite (6) des Filterelementrandes mit dem einen Gehäuseteil (3) fluiddicht verbunden und die Oberfläche der zweiten Seite (7) des Filterelementrandes gegen einen geschlossen umlaufenden Auflagenbereich (12) für das Filterelement des zweiten Gehäuseteils (4) gepreßt wird,
**gekennzeichnet durch** die Schritte
A Einbringen des Filterelements (5) in das zweite Gehäuseteil (4) und Fixieren des Filterelements am geschlossen umlaufenden Auflagenbereich (12) für das Filterelement,
B Schmelzen eines Teils des Kunststoffs (14') im Innenumfangsbereich der Gehäusewand des zweiten Gehäuseteils (4), deren innere Weite geringer ist als die äußere Weite der Gehäusewand des ersten Gehäuseteils (3),
C Ineinanderschieben beider Gehäuseteile (3,4), wobei ein Teil der Schmelze von der Gehäusewand des zweiten Gehäuseteils (4) **durch** Abschälen und Abrollen zwischen den geschlossen umlaufenden Bereich der Basis (13) der Gehäusewand des ersten Gehäuseteils (3) und die Oberfläche der ersten Seite (6) des Filterelementrandes gebracht wird,
D Aneinanderpressen beider Gehäuseteile (3,4) und
E Erkalten der Schmelze (14'),
wodurch eine einzige erstarrte L-förmige Kunststoffschmelzverbindung (14) zwischen den Gehäuseteilen (3,4) und zwischen dem einen Gehäuseteil (3) und der Oberfläche der ersten Seite (6) des Filterelementrandes erzeugt wird.

9. Verfahren nach Anspruch 8,
**dadurch gekennzeichnet, daß**
das Fixieren des Filterelements (5) am geschlossen umlaufenden Auflagenbereich (12) für das Filterelement gemäß Schritt A durch Erzeugen eines höheren Gasdrucks auf der Seite (6) des Filterelements, die dem Auflagenbereich abgewandt ist, durchgeführt wird.

10. Verfahren nach Anspruch 8,
**dadurch gekennzeichnet, daß**
das Fixieren des Filterelements (5) am geschlossen umlaufenden Auflagenbereich (12) für das Filterelement gemäß Schritt A durch Erzeugen eines Unterdrucks auf der Seite (7) des Filterelements, die dem Auflagenbereich zugewandt ist, durchgeführt wird.

## Claims

1. Filtration unit (1) of synthetic material for filtration of fluids with a filter element (5), which is arranged in a housing (2) consisting of two interengaging and interconnected members (3, 4) and separates the housing into inlet and outlet housing chambers (8, 9), which have fluid connections (10, 11), in such a manner that the first side of the filter element (6) faces the inlet housing chamber (8) and the second side of the filter element (7) faces the outlet housing chamber (9) and wherein fluidtight connections between the housing member (3) and the filter element (5) as well as the housing member (4) are present and wherein the surface of the first side (6) of the filter element edge is fluidtightly connected with one housing member (3) and the surface of the second side (7) of the filter element edge is pressed against a closed, encircling support region (12) for the filter element of the second housing member, **characterised in that** the connections consist in each instance only of a limb of a single, hardened L-shaped synthetic material melted portion (14) between the housing members (3, 4) and between one housing member (3) and the surface of the first side (6) of the filter element edge, wherein the synthetic material melted portion (14) is created by melting a part of the synthetic material of at least one housing member (4) and a limb of the hardened L-shaped synthetic material melted portion (14) pressure-tightly connects the two housing halves (3, 4).

2. Filtration unit according to claim 1, **characterised in that** the limbs of the hardened L-shaped synthetic material melted portion (14) stand approximately at right angles to one another.

3. Filtration unit according to claim 1, **characterised in that** the limbs of the hardened L-shaped synthetic material melted portion (14) stand at an angle relative to one another which is greater than 90° and less than 180°, preferably less than 135°.

4. Filtration unit according to claims 1 to 3, **characterised in that** the filter element (5) consists of at least one layer of a porous filter membrane.

5. Filtration unit according to claim 4, **characterised in that** the porous filter membranes of the filter element (5) are reinforced.

6. Filtration unit according to claims 1 to 3, **characterised in that** the filter element (5) consists of at least one layer of a non-woven fibrous material.

7. Filtration element according to the preceding claims, **characterised in that** the filter element (5) is supported by at least one filter support (15, 16).

8. Method of producing a filtration unit (1) of synthetic material with a filter element (5), which is arranged in a housing (2), which consists of two interengaging and interconnected members (3, 4), in order to separate the housing (2) into inlet and outlet housing chambers (8, 9), which have fluid connections (10, 10', 11), in such a manner that the first side (6) of the filter element (5) faces the inlet housing chamber (8) and the second side (7) of the filter element (5) faces the outlet housing chamber (9) and wherein the surface of the first side (6) of the filter element edge is fluidtightly connected with one housing member (3) and the surface of the second side (7) of the filter element edge is pressed against a closed encircling support region (12) for the filter element of the second housing member (4), **characterised by** the steps
A introducing the filter element (5) into the second housing member (4) and fixing the filter element at the closed encircling support region (12) for the filter element,
B melting a part of the synthetic material (14') in the inner circumferential region of the housing wall of the second housing member (4), the inner width of which is less than the outer width of the housing wall of the first housing part (3),
C pushing the two housing members (3, 4) into one another, wherein a part of the melted portion of the housing wall of the second housing member (4) is brought by peeling and rolling between the closed encircling region of the base (13) of the housing wall of the first housing part (3) and the surface of the first side (6) of the filter element edge,
D pressing together the two housing members (3, 4) and
E cooling the melted portion (14'),
wherein a single hardened L-shaped synthetic material melt connection (14) is produced between the housing members (3, 4) and between one housing member (3) and the surface of the first side (6) of the filter element edge.

9. Method according to claim 8, **characterised in that** the fixing of the filter element (5) at the closed encircling support region (12) for the filter element according to step A is carried out by producing a higher gas pressure on the side (6) of the filter element remote from the support region.

10. Method according to claim 8, **characterised in that** the fixing of the filter element (5) at the closed encircling support region (12) for the filter element according to step A is carried out by producing an underpressure on the side (7) of the filter element facing the support region.

## Revendications

1. Unité de filtration (1) en plastique pour filtrer des fluides, comportant un élément filtrant (5), lequel est disposé dans un boîtier (2) composé de deux parties (3, 4) se saisissant l'une dans l'autre et assemblées l'une à l'autre, et lequel divise le boîtier en des espaces de boîtier (8, 9) côté intérieur et côté extérieur disposant de raccords de fluide (10, 11) de façon que le premier côté de l'élément filtrant (6) soit tourné vers l'espace de boîtier côté entrée (8) et que le deuxième côté de l'élément filtrant (7) soit tourné vers l'espace de boîtier côté sortie (9) et moyennant quoi des raccordements étanches au fluide résident entre la partie de boîtier (3) et l'élément filtrant (5) ainsi que la partie de boîtier (4) et moyennant quoi la surface du premier côté (6) du bord de l'élément filtrant soit reliée de manière étanche au fluide à une des parties de boîtier (3) et la surface du deuxième côté (7) du bord de l'élément filtrant est pressée contre une zone de support (12) circulaire et fermée pour l'élément filtrant de la deuxième partie de boîtier
**caractérisée en ce que**
les raccordements se composent uniquement respectivement d'une branche d'une seule masse fondue de plastique (14) solidifiée et en forme de L, située entre les parties de boîtier (3, 4) et entre l'une des parties de boîtier (3) et la surface du premier côté (6) du bord de l'élément filtrant, moyennant quoi la masse fondue de plastique (14) provient de la fusion d'une partie du plastique d'au moins une des parties de boîtier (4) et une branche de la masse fondue de plastique (14) solidifiée et en forme de L relie les deux moitiés de boîtier (3, 4) de manière résistante à la pression.

2. Unité de filtration selon la revendication 1,
**caractérisée en ce que**
les branches de la masse fondue de plastique (14) solidifiée et en forme de L se situent à peu près à angle droit l'une par rapport à l'autre.

3. Unité de filtration selon la revendication 1,
**caractérisée en ce que**
les branches de la masse fondue de plastique (14) solidifiée et en forme de L se situent l'une par rapport à l'autre dans un angle supérieur à 90° et inférieur à 180°, de préférence inférieur à 135°.

4. Unité de filtration selon les revendications 1 à 3,
**caractérisée en ce que**
l'élément filtrant (5) se compose d'au moins une couche d'une membrane filtrante poreuse.

5. Unité de filtration selon la revendication 4,
**caractérisée en ce que** les membranes filtrantes poreuses de l'élément filtrant (5) sont renforcées.

6. Unité de filtration selon les revendications 1 à 3,
**caractérisée en ce que**
l'élément filtrant (5) se compose d'au moins une couche d'un tissu fibreux.

7. Elément filtrant selon les revendications précédentes,
**caractérisé en ce que**
l'élément filtrant (5) est soutenu par au moins un support filtrant (15, 16).

8. Procédé de fabrication d'une unité de filtration (1) en plastique comportant un élément filtrant (5), lequel est disposé dans un boîtier (2) composé de deux parties (3, 4) se saisissant l'une dans l'autre et assemblées l'une à l'autre, afin de diviser le boîtier (2) en des espaces de boîtier (8, 9) côté intérieur et côté extérieur disposant de raccords de fluide (10, 10', 11) de sorte que le premier côté (6) de l'élément filtrant (5) soit tourné vers l'espace de boîtier côté entrée (8) et que le deuxième côté (7) de l'élément filtrant (5) soit tourné vers l'espace de boîtier côté sortie (9) et moyennant quoi la surface du premier côté (6) du bord de l'élément filtrant est reliée de manière étanche au fluide à une des parties de boîtier (3) et la surface du deuxième côté (7) du bord de l'élément filtrant est pressée contre une zone de support (12) circulaire et fermée pour l'élément filtrant de la deuxième partie de boîtier (4),
**caractérisé par** les étapes consistant à
A introduire l'élément filtrant (5) dans la deuxième partie de boîtier (4) et fixer l'élément filtrant sur la zone de support (12) fermée et circulaire pour l'élément filtrant,
B fondre une partie du plastique (14') dans la zone périphérique intérieure de la paroi de boîtier de la deuxième partie de boîtier (4), paroi dont la largeur intérieure est inférieure à la largeur extérieure de la paroi de boîtier de la première partie de boîtier (3),
C emboîter latéralement les deux parties de boîtier (3, 4), moyennant quoi une partie de la masse fondue est amenée de la partie de boîtier de la deuxième pièce de boîtier (4) par écaillage et déroulement entre la zone circulaire et fermée de la base (13) de la paroi de boîtier de la première partie de boîtier (3) et la surface du premier côté (6) du bord de l'élément filtrant,
D presser l'une contre l'autre les deux parties de boîtier (3, 4) et
E refroidir la masse fondue (14'), grâce à quoi un seul raccordement de masse fondue de plastique (14) solidifié et en forme de L est créé entre les parties de boîtier (3, 4) et entre l'une des parties de boîtier (3) et la surface du premier côté (6) du bord de l'élément filtrant.

9. Procédé selon la revendication 8,
**caractérisé en ce que**
la fixation de l'élément filtrant (5) est réalisée sur la zone de support (12) circulaire et fermée pour l'élément filtrant selon l'étape A en créant une pression de gaz supérieure du côté (6) de l'élément filtrant opposé à la zone de support.

10. Procédé selon la revendication 8,
**caractérisé en ce que**
la fixation de l'élément filtrant (5) est réalisée sur la zone de support (12) circulaire et fermée pour l'élément filtrant selon l'étape A en créant une dépression du côté (7) de l'élément filtrant tourné vers la zone de support.
